# EUROPEAN PATENT SPECIFICATION

(11) **EP 2 735 443 B1**
(45) Date of publication and mention of the grant of the patent: **19.12.2018**
(21) Application number: 12814723.8
(22) Date of filing: 18.07.2012
(51) Int. Cl.: B32B 38/06, G03H 1/02, B32B 37/12, B32B 37/14, B32B 38/10, B44C 1/00, G02B 5/32

(54) **PREPARATION PROCESS FOR HOLOGRAPHIC PATTERNED FILM AND HOLOGRAPHIC PATTERNED FILM**
VERFAHREN ZUR HERSTELLUNG EINES HOLOGRAPHISCHEN GEMUSTERTEN FILMS UND HOLOGRAPHISCHER GEMUSTERTER FILM
PROCESSUS DE PRÉPARATION D'UNE PELLICULE À MOTIF HOLOGRAPHIQUE ET PELLICULE À MOTIF HOLOGRAPHIQUE

(30) Priority: 19.07.2011 CN 201110202016
(43) Date of publication of application: 28.05.2014
(73) Proprietor: Chen, Weiling, Shantou, Guangdong 515041 (CN)
(72) Inventor: Chen, Weiling, Shantou, Guangdong 515041 (CN)
(74) Representative: AWA Sweden AB
(86) International application number: PCT/CN2012/000968
(87) International publication number: WO 2013/010379

(56) References cited:
- WO-A1-2010/147185
- CN-A- 102 225 636
- CN-A- 102 225 668
- CN-A- 102 350 853
- CN-A- 102 350 890
- CN-B- 101 326 058
- CN-C- 100 454 180
- CN-U- 201 941 283
- CN-U- 202 123 720
- JP-A- H09 305 115

## Description

### Technical Field

The present invention relates to a holographic pattern film production process and to a holographic pattern film.

### Background Technologies

In the existed technologies for production of the holographic pattern film, the used process is as follows: in the embossing machine, the holographic pattern is directly embossed on the film; the produced holographic pattern film can be used as the transfer film for intermediate products, and can also be sold or used as a finished the holographic pattern film. However, it is obvious that in the existed technologies, the holographic pattern embossing process should be performed repeated on the film surface of each roll, with low production efficiency. According to the statistics, with the production process in the above process and the existed production capacity, only 30,000m of the film can be produced on an embossing machine and the efficiency of the embossing process is only 1/3 of the efficiency of the coating process.

However, it is possible to save its cost and increase its efficiency during the production process of the holographic pattern film. Its reason is that the so-called holographic pattern is to emboss the holographic interference stripes with the relief structure form on the base film (plastic film, paper or other materials) with the embossing process to get the holographic pattern. From the macro-vision, it reflects a variety of holographic patterns, but from the micro-vision, it reflects trenches with interference stripes with a certain depth that can be replicated.

Based on the research and analysis on the above trench structure, the applicant has considered that it can be completely copied from the microscopic structure. Therefore, the replication of the holographic pattern can be achieved through the precise replication of holographic pattern information trench structure, which can greatly reduce the production cost and increase the production efficiency.

Document JP 9-305115 discloses a method which involves forming a metallic reflection layer on a hologram forming face of a resin sheet thereby forming a relief type hologram on the surface. A peelability deposition layer which consists of a low material that has affinity with metallic reflection layer is formed on the resin sheet by physical vapour deposition. An adhesive agent layer of alkali solubility and a paper base material are sequentially laminated on the peelability deposition layer.

### Content of Invention

The objectives of the present invention are as follows:
1. A holographic pattern film production process is provided, and the main principle of the production process is to achieve the multiple copies of the holographic pattern micro trench structure on the surface of a base film with its copy characteristics.
2. A holographic pattern film is provided, the holographic pattern film is produced with the coating process, and the holographic pattern trench structure copied on the surface of the base film is on the information transfer layer, so it can achieve the precise replication of the holographic pattern on the base film, with high replication accuracy, good effect and high production efficiency.
3. A holographic pattern film production system is provided, including the base film, the transfer film and the holographic pattern film.

The technical solution for the present invention is as follows:
A holographic pattern film production process is as follows:
(1) Vapor-deposit an information transfer layer on a base film surface with a holographic pattern to obtain a transfer film (2) Coat an adhesive layer on the information transfer layer or a foil film layer, and laminate the transfer film and the foil film. The adhesive layer is an acrylic resin or a modified acrylic resin, an urethane resin or a modified polyurethane resin, an epoxy resin or a modified epoxy resin, or the copolymer / mixture of the above substances;
(3) Peel off the base film to get the holographic pattern film;

Wherein a trench structure of the holographic pattern on the base film surface is copied to the information transfer layer.

Further, in the process, the structure of the base film includes the foil layer and the information layer from up down, wherein the holographic pattern is embossed on the surface of the information layer and the described foil film layer is selected from PET film, PP film, PI film, PC film, PS film, PE film, PVC film, PVDC film, nylon film, composite films of the above films, aluminum foil film, copper foil film and other common metal foil film. The base film in the present invention is selected from the roll film, the foil film or the composite films of the foil film and other film. Compared with the base film made of other materials, the full grating and stable trench structure on the surface of the foil film layer is more conducive to the precise replication of the trench structure. The roll-type base film applies to the continuous production applications of large-scale embossing machine, coating machine and laminating machine, which can greatly improve the operation efficiency.

Further, in the process described above, the structure of the base film includes the foil layer and the information layer from up down, wherein the holographic pattern is embossed on the surface of the information layer and the described foil film layer is selected from PET film, PP film, PI film, PC film, PS film, PE film, PVC film, PVDC film, nylon film, composite films of the above films, aluminum foil film, copper foil film and other common metal foil film. The base film coated with the information protective layer on its surface is not only selected from the common materials on the market with readily available and low cost, but also can avoid impossible damage of the trench structure on the surface during the production process, which can not impact the replication of the trench structure.

Further, in the process, the foil film is selected from PET film, PP film, PI film, PC film, PS film, PE film, PVC film, PVDC film, nylon film, composite films of the above films, aluminum foil film, copper foil film and other common metal foil film.

Further, in the above process, further comprising: Coat a transfer layer on the surface of the base film, and then vapor-deposit the information transfer layer. The material for the transfer layer is one of the epoxy resin or the modified epoxy resin, the acrylic resin or the modified acrylic resin, the urethane resin or the modified polyurethane resin, or the copolymer / mixture of the above substances. Coat with a coating machine to the amount of 1-20 g/m² and dry it at 80-200°C with the drying time of 10-60s and the operation speed of 20-150m/min. Another transfer layer can be added to separate properly the base film and the information transfer layer. All described materials for the transfer layer have transferability and can be applied to the gravure coating. The process parameters within the above range are the optimized parameters for thickness and coating of the transfer layer, the transfer layer produced with the above process parameters not only ensure rapid and complete separation of the base film and the information transfer layer, but also can ensure that the holographic pattern trench structure on the base film can be exactly duplicated between the information protective layer and the information transfer layer.

Further, in the process, wherein the material for the information transfer layer is one of metal, metal oxide, zinc sulfide, silicon oxide or mixture of the latter two substances, with the thickness of 50-1000Å, the specific vapor-deposition process is carried out in a vacuum deposition machine with the vacuum of less than 10⁻² mbar and the speed of 60-1000m/min. The information transfer layer vapor-deposited with the above materials can form a stable, uniform and dense adhesion on the trench structure of the base film, so the holographic pattern trench structure on the surface of the base film can be accurately replicated and applied for the vapor-deposition with high-speed roll and can achieve a better effect. The following significant technical effects can be achieved with the above vapor-deposition process parameters and the layer thickness: The thickness of the vapor-deposition layer is 50-1000Å, with which the holographic pattern trench structure formed is more precise from the micro structure and has better visual effect from the macro structure. The too thin structure can result in the visual distortion of the holographic pattern trench structure in subsequent replications and the too thick structure can not only increase its cost, but also result in unstable trench structure replication, to affect its effect. Therefore, as the carrier to replicate the trench structure on the surface of the base film, the information transfer layer is important for stability and level of replication of the trench structure. Zinc sulfide and silicon oxide are all transparent materials, which can be used for more product selection in the process, and can make transparent or opaque effects on the foil film according to the requirements in the actual applications.

Further, in the process described above, the described laminating process is that the drying process is carried out at 80-150°C in the laminating machine, with the drying time of 10-60s and the operation speed of 20-150m/min. All the materials applied for the adhesive layer has the thermoset, which can ensure the solid adhesion and easy operation of the information transfer layer and the paper base layer in the complex process, and are all common industrial materials, which can save the cost. The selection of above process parameters can achieve the following technical effects: Too high temperature and too long drying time can destroy the structure between the information layers and too low temperature and too short drying time can not achieve the firm adhesion effect; too fast operation speed can cause uneven coating and incomplete drying for the adhesive layer and too slow operation speed can affect its efficiency. Therefore, the drying process should be carried out at 80-150°C, with the drying time of 10-60s and the operation speed of 20-150m/min, with which compared with the parameters in common processes, not only more superior effect of the adhesive layer can be achieved, but also the trench microstructure for replication of the information transfer layer can not be destructed in particular, to ensure the precise replication of the holographic pattern trench structure between the base film and the information transfer layer and thus achieve the precise replication of the holographic pattern on the transfer film.

The characteristic of the holographic pattern film production process is that the described process is composed of the following steps:
Coat the second protective layer on the surface of the holographic pattern film, laminate it with other film and then peel off the laminate film, to achieve the modified holographic pattern film. There is the information transfer layer on the surface of the holographic pattern film produced with the above process, on which there is the trench structure for replication of the surface of the base film, but there is no the mirror (film surface) effect in the traditional process on its surface because the laminating process has not been carried out. Therefore, as the modification for the process described above, the present application has proposed the holographic pattern film application method to achieve the modified holographic pattern film, which can achieve the same transferred film surface (mirror) effect as the holographic pattern film produced with the conventional transfer film process.

Further, in the process described above, the second protection layer can be coated selectively on the surface of the holographic pattern film to achieve different effects.

Further, in the process described above, the material for the second protective layer is any one of the acrylic resin or the modified acrylic resin, the urethane resin or the modified polyurethane resin, the epoxy resin or the modified epoxy resin, or the copolymer / mixture of the above substances. The specific coating process is to coat the amount of 1-20 g/m² with a coating machine and dry it at 80-200°C, with the drying time of 10-60s and the operation speed of 20-150m/min. The described material selected for the second protective layer can form a dense structure on the surface of the holographic pattern film, can uniformly fill the trench structure on its surface to form a protective surface, and can apply for the gravure coating. The above parameters are the optimized parameters for thickness and coating of the transfer layer, with which the produced second protective layer can obtain the following technical effects. The thickness of the second protective layer is coated uniformly and densely, too large thickness can waste its materials and impact on the visual effect of the holographic pattern on the surface, and too small thickness can not play an effective protection role and can impact on the replication effect of holographic pattern.

A holographic pattern film with the structure as follows:
Base film with a holographic pattern , has a trench structure on its surface;
Foil film;
The material for the described adhesive layer is any one of the acrylic resin or the modified acrylic resin, the urethane resin or the modified polyurethane resin, the epoxy resin or the modified epoxy resin, or the copolymer / mixture of the above substances;
Information transfer layer;
Wherein the trench structure on the surface of the base film that can be duplicated on the information transfer layer.

Further, the foil film is selected from PET film, PP film, PI film, PC film, PS film, PE film, PVC film, PVDC film, nylon film, composite films of the above films, aluminum foil film, copper foil film and other common metal foil film.

Further, in the holographic pattern film above, the material for the described information transfer layer is any one of metal, metal oxide, zinc sulfide, silicon oxide or mixture of the latter two substances, with the thickness of 50-1000Å.

Further, the above holographic pattern film also includes a second protective layer on the information transfer layer, and the material for the second protective layer is any one of the acrylic resin or the modified acrylic resin, the urethane resin or the modified urethane resin, the epoxy resin or the modified epoxy resin, or the copolymer / mixture of the above substances.

A holographic pattern film production system, including the base film, the transfer film and the holographic pattern film described as before. A holographic pattern film production system, including a holographic pattern film, which has a base film ,a Foil film, an adhesive layer and an information transfer layer; a base film with a holographic pattern , has a trench structure on its surface; an adhesive layercomes from the acrylic resin or the modified acrylic resin, the urethane resin or the modified polyurethane resin, the epoxy resin or the modified epoxy resin, or the copolymer / mixture of the above substances; an Information transfer layer in the base film surface; wherein the information transfer layer has a trench structure copied to the surface of the base film.

The beneficial effects of the present invention are as follows. With the exact replication of the holographic pattern trench structure on the surface of the base film, the present invention can modify the repeated processes, especially for the holographic pattern embossing process in existed technologies for production of the holographic pattern film as the duplication of the holographic pattern trench structure on the surface of the base film. The coating process used for production of the holographic pattern film can greatly reduce the production cost and increase the production efficiency; in particular, it can eliminate the repeated embossing process, which is the most tedious and has the biggest impact on the production cost and the efficiency. According to the statistics, the production efficiency of the coating process can be improved over 3 times of the production efficiency of embossing process. The new holographic pattern film from the present invention can achieve the same transferred film surface (mirror) effect as one produced with the conventional transfer film production process.

### Figure Description

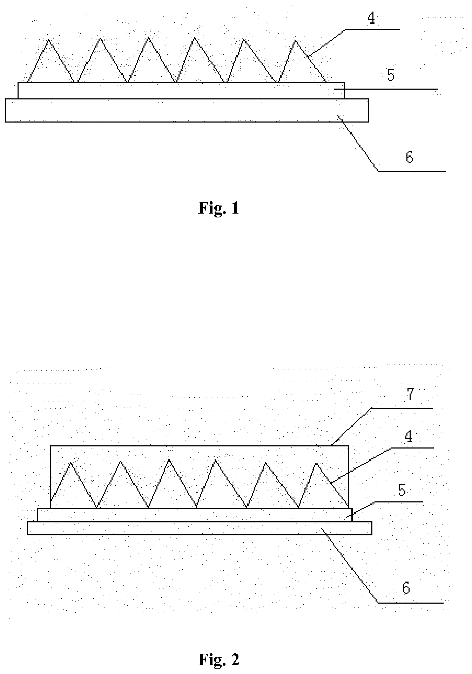

Fig. 1 is the microstructure schematic of the holographic pattern film from the present invention.
Fig. 2 is the microstructure schematic of the holographic pattern film in another preferred example from the present invention.
Fig. 3 is the process flow schematic from the present invention.

In the above schematics: 1 - Base film; 2 - Holographic pattern trench structure on the surface of the base film; 4 - Information transfer layer; 5 - Adhesive layer; 6 - Foil film; 7 - Second protective layer.

### Specific Implement Method

The present invention provides a holographic pattern film production process, with the principle as follows: with the exact replication features of the holographic pattern micro trench structure, duplicate the holographic pattern trench structure on the surface of the base film on the information transfer layer to form the transfer film with the duplicated holographic pattern micro trench structure, and then produce the holographic pattern film. The holographic pattern on the base film is retained in the base film. From the process, the coating process, instead of the embossing process in existed technologies, is used for the production of holographic pattern film, which can greatly improve the production efficiency and reduce its cost.

In order to meet the requirements for exact duplication of the holographic pattern trench structure, in the production process, the applicant has optimized the material selection and the process parameters for all layers, which can improve the production efficiency, and more importantly, can ensure the exact duplication of the holographic pattern trench structure among all layers during the subsequent processes. The trench structure duplicated with the process parameters above has a distinct arrangement, stable structure and high duplication accuracy, thus it can reflect the exact duplication of the holographic pattern on the base film from the visual view.

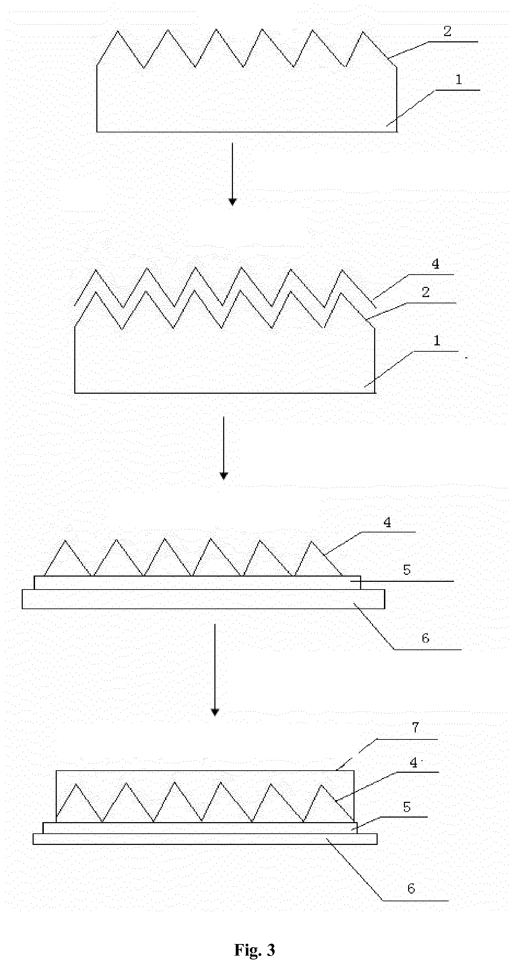

Specifically, as shown in Fig. 3, there is a holographic pattern trench structure 2 on the surface of the base film 1. Vapor-deposit the information transfer layer 4 on the surface of the base film, and the vapor-deposition process is carried out in a vacuum deposition machine, with the vacuum of less than 10⁻²mbar and the speed of 60-1000m/min. With the exact duplication feature of the holographic pattern trench structure among all structure layers, exactly duplicate the above trench structure 2 on the information transfer layer 4. The product with the layer structure can be named as the transfer film, which is the basis for the subsequent processes in the present invention.

Coat the adhesive layer 5 on the information transfer layer 4 of the transfer film, or on the foil film, and laminate the transfer film and the foil film, with the laminating process as follows: Dry it in the laminating machine at 80 -150°C, with the drying time of 10-60s and the operation speed of 20-150m/min. Peel off the base film to get the holographic pattern film. After peeling off, the information transfer layer 4 along with the adhesive layer is attached on the foil film. Because the holographic pattern trench structure 2 on the base film is duplicated on the information transfer layer 4, the holographic pattern film can achieve the duplication of the holographic pattern on the base film. At that time the complete holographic pattern is retained on the base film, which can be continuously used for the subsequent processes. In the laminating process, the adhesive layer can be dried and then combined, or be combined and then dried, which is not limited in the present application.

As a modification, coat a transfer layer between the base film 1 and the information transfer layer 4, which can provide a superior duplication and transfer effects on the holographic pattern trench structure on the surface of the base film. The transfer layer should be coated with the wet amount of 1-20 g/m² with a coating machine and be dried at 80-200 °C, with the drying time of 10-60s and the operation speed of 20-150m/min.

As another modification, on the basis of production of the above holographic pattern film, the above process can be further modified as follows: Coat the second protective layer on the surface of the holographic pattern film, laminate it with the foil film, and peel off it, to achieve the modified holographic pattern film. Because the laminating process is not performed, there is not the mirror (film surface) effect from the traditional transfer film process on its surface, which is the inadequacy from holographic pattern film produce with the process. So there is the same holographic pattern trench structure on the information transfer layer as on the base film, and it has a full grating, stable trench structure, and clear arrangement. The new holographic pattern film can achieve the same transferred film surface (mirror) effect as one produced with the conventional transfer film processes.

The base film from the present invention is selected from the common base films on market. The roll-type film, the foil film, or the composite films of foil film and other film with the holographic pattern trench structure on the surface should be preferred, because the full surface grating and stable trench structure are more conducive to the exact duplication of the trench structure. The roll-type base film applies for continuous production applications of large-scale embossing machine, coating machine and laminating machine, which can greatly improve the operation efficiency. The common base films on market mainly includes the following two structures, between which one is a two-layer structure of the foil layer and the information layer embossed with the holographic pattern. Therefore, from a microscopic, there is a holographic pattern trench structure on the surface of the base film used for replication of the trench structure; and the other is a three-layer structure of the foil layer, the information layer and the information protective layer embossed with the holographic pattern. The described foil layer is selected from PET film, PP film, PI film, PC film, PS film, PE film, PVC film, PVDC film, nylon film, composite films of the foil films, aluminum foil film, copper foil film and other common metal foil film, which can ensure that the information layer is firmly attached to meet the temperature-resistant, tension-resistant and other subsequent processing requirements.

### First group of examples (1-3)

The copper medium is used for vapor-deposition of the information transfer layer, the polyurethane resin is used for the adhesive layer, the acrylic resin is used for the second protective layer, and the foil film, the urethane resin layer, the copper layer or the acrylic resin layer is used for the holographic pattern film structure.

### Example 1

The vapor-deposition thickness of the information transfer layer is 50 Å. In the vapor-deposition process, the vacuum degree is 10⁻² mbar and the speed is 60m/min; in the laminating process of the adhesive layer, the drying temperature is 80°C, the drying time is 10s and the operation speed is 20m/min. The acrylic resin with the wet amount of 1 g/m² should be coated, and dried at 80°C, with the drying time of 10s and the operating speed of 20m/min.

### Example 2

The vapor-deposition thickness of the information transfer layer is 500 Å. In the vapor-deposition process, the vacuum degree is 10⁻³ mbar and the speed is 500m/min; in the laminating process of the adhesive layer, the drying temperature is 120°C, the drying time is 30s and the operation speed is 100m/min. The acrylic resin with the wet amount of 10 g/m² should be coated, and dried at 150°C, with the drying time of 30s and the operating speed of 100m/min.

### Example 3

The vapor-deposition thickness of the information transfer layer is 1000 Å. In the vapor-deposition process, the vacuum degree is 10⁻³ mbar and the speed is 1000m/min; in the laminating process of the adhesive layer, the drying temperature is 150°C, the drying time is 60s and the operation speed is 150m/min. The acrylic resin with the wet amount of 20 g/m² should be coated, and dried at 60°C, with the drying time of 60s and the operating speed of 150m/min.

### Second group of examples (4-6)

Different from the first group of examples, the metal aluminium is used for the information transfer; the acrylic resin is used for the adhesive layer; the urethane resin is used for the second protective layer; and the foil film, the acrylic resin layer, the aluminum layer or the urethane resin layer is used for the holographic pattern film structure.

### Third group of examples (7-9)

Different from the first group of examples, the silicon oxide is used for the information transfer layer; the modified acrylic resin is used for the adhesive layer; the epoxy resin is used for the second protective layer; and the foil film, the modified acrylic resin layer, the silicon oxide layer, or the epoxy resin layer is used for the holographic pattern film structure.

### Fourth group of examples (10-12)

Different from the first group of examples, the zinc sulfide is used for the information transfer layer; the epoxy resin is used for the adhesive layer; the modified acrylic resin is used for the second protective layer; and the foil film, the epoxy resin layer, the zinc sulfide layer, or the modified acrylic resin layer is used for the holographic pattern film structure.

### Fifth group of examples (13-15)

Different from the first group of examples, the metal zinc is used for the information transfer layer; the modified epoxy rinsing is used for the adhesive layer; the modified urethane resin is used for the second protective layer; and the foil film, the modified epoxy resin layer, the metal zinc layer, or the modified urethane resin layer is used for the holographic pattern film structure.

### Sixth group of examples (16-18)

Different from the first group of examples, the zinc sulfide is used for the information transfer layer; the modified urethane resin is used for the adhesive layer; the modified epoxy resin is used for the second protective layer; and the foil film, the modified polyurethane resin layer, the zinc sulfide layer or the modified epoxy resin layer is used for the holographic pattern film structure.

In the examples of 1-18, coat a transfer layer on the surface of the base film and vapor-deposit the information transfer. The cellulosic resin, the acrylic resin, the urethane resin, the epoxy resin, the modified cellulose resin, the modified acrylic resin, the modified urethane resin, the modified epoxy resin, and waxes are used for the transfer layer separately. The process conditions are described in 1-18 above, and the above materials for the transfer layer are used circulatory for the examples of 19-36.

Through the tests, in the above examples, the replication accuracy of the holographic pattern film trench structure from the base film on the holographic pattern film is more than 90%; and compared from a visual view, the holographic pattern on the holographic pattern film is no different from the holographic pattern on the base film.

## Claims

1. A holographic pattern film production process, comprising the steps:
1.1 vapor-deposit an information transfer layer (4) on a base film surface with a holographic pattern (2) to obtain a transfer film;
1.2 coat an adhesive layer (5) on the information transfer layer (4) or a foil film layer (6) and laminate the transfer film and the foil film, wherein the adhesive layer (5) is an acrylic resin or a modified acrylic resin, an urethane resin or a modified polyurethane resin, an epoxy resin or a modified epoxy resin, or a copolymer or mixture of the above substances; and
1.3 peel off the base film (1) to get the holographic pattern film;
wherein a trench structure of the holographic pattern on the base film surface (2) is copied to the information transfer layer (4);
**characterized in that** the foil film layer (6) is selected from PET film, PP film, PI film, PC film, PS film, PE film, PVC film, PVDC film, nylon film, composite films of the above films, aluminum foil film, copper foil film and other common metal foil film.

2. Process according to claim 1, wherein the base film (1) structure includes the foil film layer (6) and the information layer from up down, wherein the holographic pattern is embossed on the surface of the information layer.

3. Process according to claim 1, wherein the holographic pattern film structure includes the foil layer (6), the information layer and an information protective layer, and the holographic pattern is embossed on the surface of the information layer.

4. Process according to any one of claims 1-3, further comprising coating a transfer layer on the surface of the base film (1), then vapor-depositing the information transfer layer (4), the material for the transfer layer being selected from epoxy resin, modified epoxy resin, acrylic resin, modified acrylic resin, urethane resin, modified polyurethane resin and copolymers / mixtures of the above substances; coating with a coating machine to the amount of 1-20 g/m², drying at 80-200 °C with a drying time of 10-60 seconds and using an operation speed of 20-150 m/min.

5. Process according to any one of claims 1-3, wherein the material for the information transfer layer (4) is selected from metal, metal oxide, zinc sulfide, silicon oxide and mixtures of the latter two substances, with a thickness of 50-1000 Å, and wherein the specific vapor-deposition process is carried out in a vacuum vapor-deposition machine, with a vacuum of less than 10⁻² mbar and a speed of 60-1000 m/min.

6. Process according to any one of claims 1-3, wherein said laminating process comprises drying the holographic pattern film in a composite machine at 80-150 °C with a drying time of 10-60 seconds and an operation speed of 20-150 m/min.

7. Process according to claim 1, further comprising coating a second protective layer (7) on the surface of the holographic pattern film, laminating it with the film, and peeling off the laminated film to obtain the improved holographic pattern film.

8. Process according to claim 7, wherein the second protective layer (7) is selectively coated on the surface of the holographic pattern film.

9. Process according to claim 7, wherein the material of the second protective layer (7) is selected from acrylic resin, modified acrylic resin, urethane resin, modified polyurethane resin, epoxy resin, modified epoxy resin and copolymers / mixtures of the above substances; and wherein the specific coating process comprises coating with the coating machine to the amount of 1-20 g/m², drying at 80-200 °C with a drying time of 10-60 seconds and using an operation speed of 20-150 m/min.

10. A holographic pattern film, comprising:
a base film (1) with a holographic pattern, having a trench structure on its surface (2);
a foil film (6);
an adhesive layer (5) selected from acrylic resin, modified acrylic resin, urethane resin, modified polyurethane resin, epoxy resin, modified epoxy resin and copolymers/mixtures of the above substances;
an information transfer layer (4), which is vapor-deposited on the base film surface;
wherein the information transfer layer (4) has a trench structure copied from the surface of the base film;
**characterized in that** the foil film (6) is selected from PET film, PP film, PI film, PC film, PS film, PE film, PVC film, PVDC film, nylon film, composite films of the above films, aluminum foil film, copper foil film and other common metal foil film.

11. Film according to claim 10, wherein the material for the information transfer layer (4) is selected from metal, metal oxide, zinc sulfide, silicon oxide and mixtures of the latter two substances, with a thickness of 50-1000 Å.

12. Film according to claim 10, further comprising a second protective layer (7), which is on the information transfer layer (4), the material for the second protective layer being selected from acrylic resin, modified acrylic resin, urethane resin, modified polyurethane resin, epoxy resin, modified epoxy resin and copolymers / mixtures of the above substances.

## Patentansprüche

1. Verfahren zur Herstellung eines Films mit holografischem Muster, wobei es die folgenden Schritte umfasst:
1.1 Gasphasenabscheiden einer Informationsübertragungsschicht (4) auf eine Trägerfilmoberfläche mit einem holografischen Muster (2), um einen Übertragungsfilm zu erhalten;
1.2 Beschichten der Informationsübertragungsschicht (4) oder einer Folienfilmschicht (6) mit einer Klebstoffschicht (5), und Laminieren des Übertragungsfilms und des Folienfilms, wobei es sich bei der Klebstoffschicht (5) um ein Acrylharz oder ein modifiziertes Acrylharz, ein Urethanharz oder ein modifiziertes Polyurethanharz, ein Epoxyharz oder ein modifiziertes Epoxyharz oder um ein Copolymer oder eine Mischung der obigen Substanzen handelt; und
1.3 Abschälen des Trägerfilms (1), um den Film mit holografischem Muster zu erhalten;
wobei eine Furchenstruktur des holografischen Musters, welches sich auf der Oberfläche des Trägerfilms befindet (2), auf die Informationsübertragungsschicht (4) kopiert wird;
**dadurch gekennzeichnet, dass** die Folienfilmschicht (6) aus PET-Film, PP-Film, PI-Film, PC-Film, PS-Film, PE-Film, PVC-Film, PVDC-Film, Nylonfilm, Verbundfilmen aus den obigen Filmen, Aluminiumfolienfilm, Kupferfolienfilm und sonstigen üblichen Metallfolienfilmen ausgewählt ist.

2. Verfahren gemäß Anspruch 1, wobei die Struktur des Trägerfilms (1) von oben nach unten die Folienfilmschicht (6) und die Informationsschicht beinhaltet, wobei das holografische Muster auf die Oberfläche der Informationsschicht geprägt ist.

3. Verfahren gemäß Anspruch 1, wobei die Struktur des Films mit holografischem Muster die Folienschicht (6), die Informationsschicht und eine informationsschützende Schicht beinhaltet und das holografische Muster auf die Oberfläche der Informationsschicht geprägt ist.

4. Verfahren nach einem beliebigen der Ansprüche 1 bis 3, wobei es weiterhin das Beschichten der Oberfläche des Trägerfilms (1) mit einer Übertragungsschicht umfasst, woraufhin die Gasphasenabscheidung der Informationsübertragungsschicht (4) erfolgt, wobei das Material für die Übertragungsschicht aus Epoxyharz, modifiziertem Epoxyharz, Acrylharz, modifiziertem Acrylharz, Urethanharz, modifiziertem Polyurethanharz und Copolymeren / Mischungen der obigen Substanzen ausgewählt ist; wobei das Beschichten mit einem Beschichtungsgerät bis zu einer Menge von 1 bis 20 g/m² erfolgt, wobei das Trocknen bei 80 bis 200 °C erfolgt, wobei die Trocknungszeit 10 bis 60 Sekunden beträgt und eine Betriebsgeschwindigkeit von 20 bis 150 m/min. zur Anwendung kommt.

5. Verfahren gemäß einem beliebigen der Ansprüche 1 bis 3, wobei das Material für die Informationsübertragungsschicht (4) aus Metall, Metalloxid, Zinksulfid, Siliciumoxid und Mischungen der letzteren beiden Substanzen ausgewählt ist, mit einer Dicke von 50 bis 1.000 Å, und wobei das spezifische Gasphasenabscheidungsverfahren in einem Vakuum-Gasphasenabscheidungsgerät durchgeführt wird, mit einem Vakuum von weniger als 10⁻² mbar und einer Geschwindigkeit von 60 bis 1.000 m/min.

6. Verfahren gemäß einem beliebigen der Ansprüche 1 bis 3, wobei das Laminierverfahren ein Trocknen des Films mit holografischem Muster in einem Kombinationsgerät bei 80 bis 150 °C umfasst, mit einer Trocknungszeit 10 bis 60 Sekunden und einer Betriebsgeschwindigkeit von 20 bis 150 m/min.

7. Verfahren gemäß Anspruch 1, wobei es weiterhin das Beschichten der Oberfläche des Films, der ein holografisches Muster aufweist, mit einer zweiten Schutzschicht (7), das Laminieren derselben mit dem Film und das Abschälen des laminierten Films umfasst, um den verbesserten Film mit holografischem Muster zu erhalten.

8. Verfahren gemäß Anspruch 7, wobei die Oberfläche des Films, der ein holografisches Muster aufweist, auf selektive Weise mit der zweiten Schutzschicht (7) beschichtet wird.

9. Verfahren gemäß Anspruch 7, wobei das Material der zweiten Schutzschicht (7) aus Acrylharz, modifiziertem Acrylharz, Urethanharz, modifiziertem Polyurethanharz, Epoxyharz, modifiziertem Epoxyharz und Copolymeren / Mischungen der obigen Substanzen ausgewählt ist; und wobei das spezifische Beschichtungsverfahren das Beschichten mit einem Beschichtungsgerät bis zu einer Menge von 1 bis 20 g/m² umfasst, wobei das Trocknen bei 80 bis 200 °C erfolgt, wobei die Trocknungszeit 10 bis 60 Sekunden beträgt und eine Betriebsgeschwindigkeit von 20 bis 150 m/min. zur Anwendung kommt.

10. Film mit holografischem Muster, der Folgendes umfasst:
einen Trägerfilm (1) mit einem holografischen Muster, dessen Oberfläche (2) eine Furchenstruktur aufweist;
einen Folienfilm (6);
eine Klebstoffschicht (5), die aus Acrylharz, modifiziertem Acrylharz, Urethanharz, modifiziertem Polyurethanharz, Epoxyharz, modifiziertem Epoxyharz und Copolymeren/Mischungen der obigen Substanzen ausgewählt ist;
eine Informationsübertragungsschicht (4), welche durch Gasphasenabscheidung auf die Oberfläche der Trägerfilms aufgebracht wird;
wobei die Informationsübertragungsschicht (4) eine Furchenstruktur aufweist, die ausgehend von der Oberfläche des Trägerfilms kopiert wurde;
**dadurch gekennzeichnet, dass** der Folienfilm (6) aus PET-Film, PP-Film, PI-Film, PC-Film, PS-Film, PE-Film, PVC-Film, PVDC-Film, Nylonfilm, Verbundfilmen aus den obigen Filmen, Aluminiumfolienfilm, Kupferfolienfilm und sonstigen üblichen Metallfolienfilmen ausgewählt ist.

11. Film gemäß Anspruch 10, wobei das Material für die Informationsübertragungsschicht (4) aus Metall, Metalloxid, Zinksulfid, Siliciumoxid und Mischungen der letzteren beiden Substanzen ausgewählt ist, mit einer Dicke von 50 bis 1000 Å.

12. Film gemäß Anspruch 10, der weiterhin eine zweite Schutzschicht (7) umfasst, welche sich auf der Informationsübertragungsschicht (4) befindet, wobei das Material für die zweite Schutzschicht aus Acrylharz, modifiziertem Acrylharz, Urethanharz, modifiziertem Polyurethanharz, Epoxyharz, modifiziertem Epoxyharz und Copolymeren/Mischungen der obigen Substanzen ausgewählt ist.

## Revendications

1. Procédé de production de film à motif holographique, comprenant les étapes suivantes :
1.1. dépôt en phase vapeur d'une couche de transfert d'informations (4) sur une surface de film de base (2) avec un motif holographique pour obtenir un film de transfert ;
1.2. revêtement d'une couche adhésive (5) sur la couche de transfert d'informations (4) ou sur une couche de film à feuille (6) et stratification du film de transfert et du film à feuille, dans lequel la couche adhésive (5) est une résine acrylique ou une résine acrylique modifiée, une résine d'uréthane ou une résine de polyuréthane modifiée, une résine époxy ou une résine époxy modifiée, ou un copolymère ou mélange des substances ci-dessus ; et
1.3. pelage du film de base (1) pour obtenir le film à motif holographique ;
dans lequel une structure de tranchée du motif holographique sur la surface du film de base (2) est copiée sur la couche de transfert d'informations (4) ;
**caractérisé en ce que** la couche de film à feuille (6) est sélectionnée à partir d'un film PET, d'un film PP, d'un film PI, d'un film PC, d'un film PS, d'un film PE, d'un film PVC, d'un film PVDC, d'un film nylon, de films composites des films ci-dessus, d'un film en feuille d'aluminium, d'un film en feuille de cuivre et d'autres films en feuille de métal commun.

2. Procédé selon la revendication 1, dans lequel la structure du film de base (1) inclut la couche de film à feuille (6) et la couche d'informations de haut en bas, dans lequel le motif holographique est estampé sur la surface de la couche d'informations.

3. Procédé selon la revendication 1, dans lequel la structure de film à motif holographique inclut la couche à feuille (6), la couche d'informations et une couche de protection d'informations, et le motif holographique est estampé sur la surface de la couche d'informations.

4. Procédé selon l'une quelconque des revendications 1 à 3, comprenant en outre un revêtement d'une couche de transfert sur la surface du film de base (1), puis le dépôt en phase vapeur de la couche de transfert d'informations (4), le matériau pour la couche de transfert étant sélectionné à partir de résine époxy, de résine époxy modifiée, de résine acrylique, de résine acrylique modifiée, de résine uréthane, de résine de polyuréthane modifiée et de copolymères/mélanges des substances ci-dessus ; le revêtement avec une machine de revêtement d'une quantité comprise entre 1 et 20 g/m², le séchage compris entre 80 et 200°C avec un temps de séchage compris entre 10 et 60 secondes et l'utilisation d'une vitesse de fonctionnement comprise entre 20 et 150 m/mn.

5. Procédé selon l'une quelconque des revendications 1 à 3, dans lequel le matériau pour la couche de transfert d'informations (4) est sélectionné parmi un métal, un oxyde métallique, un sulfure de zinc, un oxyde de silicium et des mélanges des deux dernières substances, avec une épaisseur comprise entre 50 et 1000 Å, et dans lequel le procédé spécifique de dépôt en phase vapeur est réalisé dans une machine de dépôt en phase vapeur, avec un vide de moins de 10⁻² mbar et une vitesse comprise entre 60 et 1000 m/mn.

6. Procédé selon l'une quelconque des revendications 1 à 3, dans lequel ledit processus de stratification inclut le séchage du film à motif holographique, dans une machine composite, compris entre 80 et 150°C, avec un temps de séchage compris entre 10 et 60 secondes et une vitesse de fonctionnement comprise entre 20 et 150 m/mn.

7. Procédé selon la revendication 1, comprenant en outre le revêtement d'une seconde couche de protection (7) sur la surface du film à motif holographique, la stratification de celle-ci avec le film, et le pelage du film stratifié pour obtenir le film à motif holographique amélioré.

8. Procédé selon la revendication 7, dans lequel la seconde couche de protection (7) est sélectivement revêtue sur la surface du film à motif holographique.

9. Procédé selon la revendication 7, dans lequel le matériau de la seconde couche de protection (7) est sélectionné à partir de résine acrylique, de résine acrylique modifiée, de résine d'uréthane, de résine de polyuréthane modifiée, de résine époxy, de résine époxy modifiée et de copolymères/mélanges des substances ci-dessus ; et dans lequel le procédé de revêtement spécifique inclut un revêtement avec la machine de revêtement d'une quantité comprise entre 1 et 20 g/m², le séchage compris entre 80 et 200°C avec un temps de séchage compris entre 10 et 60 secondes et l'utilisation d'une vitesse de fonctionnement comprise entre 20 et 150 m/mn.

10. Film à motif holographique, comprenant :
un film de base (1) avec un motif holographique, présentant une structure de tranchée sur sa surface (2) ;
un film à feuille (6) ;
une couche adhésive (5) sélectionnée parmi une résine acrylique, une résine acrylique modifiée, une résine d'uréthane, une résine de polyuréthane modifiée, une résine époxy, une résine époxy modifiée et des copolymères/mélanges des substances ci-dessus ;
une couche de transfert d'informations (4), qui est déposée en phase vapeur sur la surface du film de base ;
dans lequel une structure de tranchée du motif holographique sur la surface du film de base (2) est copiée sur la couche de transfert d'informations (4) ;
**caractérisé en ce que** le film à feuille (6) est sélectionnée à partir d'un film PET, d'un film PP, d'un film PI, d'un film PC, d'un film PS, d'un film PE, d'un film PVC, d'un film PVDC, d'un film nylon, de films composites des films ci-dessus, d'un film en feuille d'aluminium, d'un film en feuille de cuivre et d'autres films en feuille de métal commun.

11. Film selon la revendication 10, dans lequel le matériau pour la couche de transfert d'informations (4) est sélectionné à partir de métal, d'oxyde métallique, de sulfure de zinc, d'oxyde de silicium et de mélanges de deux substances ci-dessus, avec une épaisseur comprise entre 50 et 1000 Å.

12. Film selon la revendication 10, comprenant en outre une seconde couche de protection (7), qui est positionnée sur la couche de transfert d'informations (4), le matériau pour la seconde couche de protection étant sélectionné à partir de résine acrylique, de résine acrylique modifiée, de résine uréthane, de résine de polyuréthane modifiée, de résine époxy, de résine époxy modifiée et de copolymères/mélanges des substances ci-dessus.
